# EUROPEAN PATENT SPECIFICATION

(11) **EP 3 245 388 B1**
(45) Date of publication and mention of the grant of the patent: **13.11.2019**
(21) Application number: 15741751.0
(22) Date of filing: 20.03.2015
(51) Int. Cl.: F01K 3/00, F01K 3/16, F28D 20/00

(54) **SYSTEM FOR STORING THERMAL ENERGY AND METHOD OF OPERATING A SYSTEM FOR STORING THERMAL ENERGY**
SYSTEM ZUR SPEICHERUNG VON WÄRMEENERGIE UND VERFAHREN ZUM BETRIEB EINES SYSTEMS ZUR SPEICHERUNG VON WÄRMEENERGIE
SYSTÈME DE STOCKAGE D'ÉNERGIE THERMIQUE ET PROCÉDÉ DE FONCTIONNEMENT DU SYSTÈME DE STOCKAGE D'ÉNERGIE THERMIQUE

(43) Date of publication of application: 22.11.2017
(73) Proprietor: Siemens Gamesa Renewable Energy A/S, 7330 Brande (DK)
(72) Inventor: BARMEIER, Till Andreas, 20259 Hamburg (DE)
(74) Representative: Aspacher, Karl-Georg
(86) International application number: PCT/EP2015/055888
(87) International publication number: WO 2016/150455

(56) References cited:
- EP-A1- 2 778 406
- WO-A1-2010/146194
- DE-A1-102012 007 210
- FR-A1- 2 346 647
- JP-A- H04 295 528
- KR-A- 20110 083 222
- US-A- 4 110 987

## Description

### Field of invention

The present invention relates to the field of storing thermal energy. Particularly, the present invention relates to a system for storing thermal energy and to a method for operating the system.

### Art Background

In today's electricity system renewable energy sources and the integration of renewable energy sources into power supply networks have become more important than ever before. Conventional power supply networks were designed for central power production with a continuous power supply. The continuous power supply may be ensured by conventional energy sources such as coal, fuel, natural gas or nuclear energy. Energy provided by renewable energy sources such as wind or solar is hard to forecast and depends on weather conditions such as wind speed and solar radiation. Thus, an integration of such fluctuating amounts of renewable energy in the power supply network challenges the power supply network. Further, the location of renewable energy production such as onshore or offshore wind or solar radiation does usually not coincidence with the region of high power consumption.

In current solutions the base load in the power supply network is provided by conventional energy such as for example fossil fuelled power plants. With an increasing amount of power from renewable energy sources, the base load needs to become more flexible, renewable energy sources need to be curtailed or the excess energy is sold cheaply abroad.

Another approach to handle the fluctuating production of renewable energy is to use energy storage systems to store excess energy. One example of an energy storage system is thermal energy storages. Thus, storing thermal energy plays a prominent role in an improvement of the stability of power supply networks. In times with no or low occurrence of wind or solar radiation or in times with high energy consumption, the stored thermal energy is extracted from the thermal energy storage and is used for producing electrical energy. The produced electrical energy is fed in the power supply network to satisfy peaks in power consumption or elevated power consumption over longer periods of time.

Thermal energy storages can be filled with solid or bulk material, such as stones, bricks or ceramics. The solid or bulk material has the ability to be heated up to an elevated temperature and store the thermal energy by keeping the elevated temperature over a predetermined period of time. A working fluid is used to heat up the solid or bulk material. In a charging cycle, when entering the thermal energy storage the working fluid has a temperature which is higher than a temperature of the solid or bulk material. Thus, energy from the working fluid is transferred to the thermal energy storage. In a discharging cycle the solid or bulk material has a temperature which is higher than the temperature of the working fluid when it is entering the thermal energy storage. Thus, thermal energy is transferred to the working fluid.

EP 2 778 406 A1 discloses a thermal energy storage and generation system. The system comprises a shared thermal storage arrangement comprising a thermal storage medium for storing energy as latent and/or sensible heat, an electrothermal energy storage system operable to convert energy into heat for storing in the shared thermal storage arrangement in an ETES charging mode, a solar thermal heat storage operable to store thermal solar energy in the thermal storage arrangement and a thermal power generation unit configured to convert thermal energy stored in the shared thermal storage arrangement into mechanical work and/or electric energy.

FR 2 346 647 A1 discloses a heat storage and recovery system which transfers heat between the porous permeable rock of a captive stratum and the free intergranular water circulated through it. It comprises two wells or groups of wells which are reversible, one ending in a "hot" and the other in a "cold" area of the stratum. A primary circuit incorporates the wells, the stratum, and a loop, external to the stratum, connecting the wells in the "hot" area with those in the "cold" area. The stratum water is circulated in a first direction, so that it flows in the loop from the cold to the hot area, and also in the reverse direction. An indirect heat exchanger transfers heat to the primary circuit when circulation is in the first direction and from it to a secondary utilisation circuit when it is in the reverse direction. Means are also provided for flow and pressure regulation in the primary circuit.

WO 2010/146194 A1 discloses a solar thermal power station with exergetic management of heat, in order to operate under nominal conditions for long periods of time every day. The power station is divided into sectors with different heating functions, in which each sector has its own heating fluid, but all of the sectors consecutively receive the same working fluid for the thermodynamic cycle. Each sector includes an array of solar collectors 1, a main exchanger 2 in thermal contact with the working fluid, an indirect heat storage system and a direct heat storage system, as well as the pumps, valves and instrumentation necessary to configure each sector according to three different circuits, thereby allowing heat energy to be stored when the captured solar radiation is above the nominal value and for this heat to be used to operate the thermodynamic cycle under nominal conditions when the radiation value falls below the nominal value.

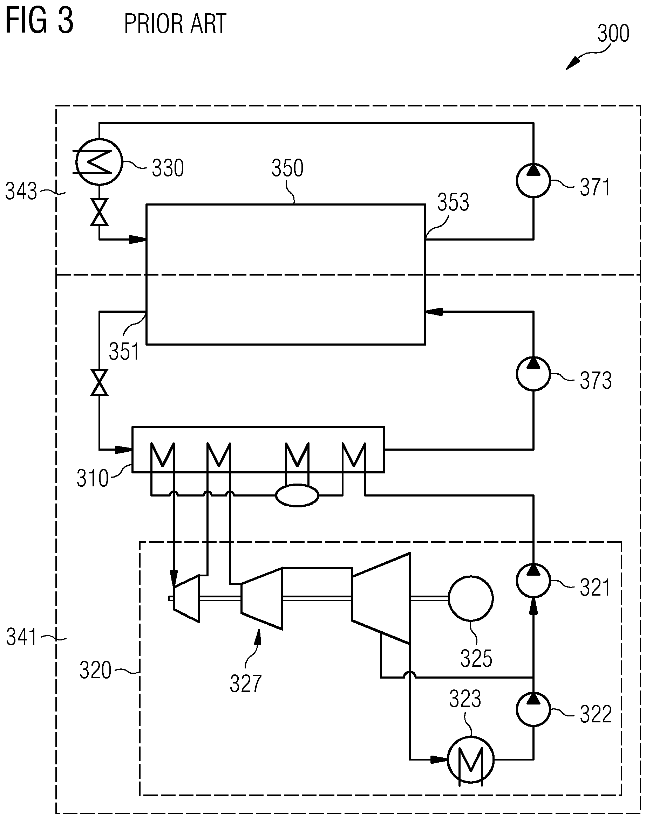

A conventional system 300 for storing thermal energy is subsequently described with reference to Fig. 3. The conventional system 300 comprises a closed charging loop 343 and a closed discharging loop 341. The closed charging loop 343 and the closed discharging loop 341 are two separate loops which both comprise a same conventional thermal storage device 350 as a particular component. The closed charging loop 343 comprises the conventional thermal storage device 350, a first conventional fluid driving device 371, such as a charging blower, and a conventional heater device 330, such as a resistant heater or an inductive heater. The closed discharging loop 341 comprises the conventional thermal storage device 350, a conventional steam generator device 310 and a second conventional fluid driving device 573, such as a discharge blower. The conventional steam generation device 310 may be a boiler, a heat exchanger or an evaporator, which transfers the thermal energy to a conventional steam turbine system 320. The conventional steam turbine system 320 then produces electrical power.

As may be seen from the above-mentioned, the conventional thermal storage device 350 is integrated in the closed charging loop 343 as well as in the closed discharging loop 341. This is due to the fact that the conventional thermal storage device 350 is provided with thermal energy or provides thermal energy depending on in which of the two closed loops 341, 343 the conventional thermal storage device 350 is operated at a certain point of time.

Further, the conventional thermal storage device 350 comprises a first conventional opening 351 and a second conventional opening 353. The first conventional opening 351 is part of the closed discharging loop 341 and is also connected with the conventional steam generation device 310. The second conventional opening 353 is part of the closed charging loop 343 and is also connected with the first conventional fluid driving device 371.

The closed charging loop 343 further comprises a conventional first pipe or duct system interconnecting the different components of the closed charging loop 343 with the conventional thermal storage device 350 as well as with each other. The first conventional fluid driving device 371 drives the working fluid in such a way that it first flows through the conventional heater device 330 to be heated up. In the closed charging loop 343 the working fluid flows from the first conventional fluid driving device 371 to the conventional heater device 330. After flowing through the conventional heater device 330 the working fluid flows through the conventional thermal storage device 350 for transferring thermal energy provided by the working fluid to the conventional thermal storage device 350. A charging of the conventional thermal storage device 350 stops when the temperature at the second conventional opening 353 of the conventional thermal storage device 350 begins to increase.

The closed discharging loop 341 further comprises a further conventional pipe or duct system. The second conventional fluid driving device 373 drives the working fluid in such a way that the working fluid first flows through the conventional thermal storage device 350 for extracting thermal energy for the conventional thermal storage device 350 in a flow direction which is opposite to the flow direction through the conventional thermal storage device 350 in the closed charging loop 343. Then the working fluid flows through the conventional steam generation device 310 for transferring the extracted thermal energy into a conventional steam turbine system 320. Afterwards, the working fluid flows through the second conventional fluid driving device 373. A discharging of the conventional thermal storage device 350 stops when the temperature of the first conventional opening 351 of the conventional thermal storage device 350 begins to decrease.

The conventional steam turbine system 320 comprises a first conventional pump 321, a second conventional pump 322, a conventional condenser 323, a conventional generator 325 and a conventional steam turbine 327. A steam turbine fluid is heated by the conventional steam generation device 310 and is driven by the first conventional pump 321 and the second conventional pump 322 through the conventional steam turbine 327 such that the conventional generator 325 generates electricity from the steam turbine fluid flowing through the conventional steam turbine 327. The generated electricity is than fed to the power supply network.

The efficiency of storing thermal energy as well as investment costs are crucial for the economic perspective for a possible integration of systems for storing thermal energy and thus for a possible integration of renewable energies in the energy supply network. Further, the reliability of the system for storing thermal energy is a key factor for the operational costs.

There may be a need for providing a robust and cost-efficient system for storing thermal energy to respond to a fluctuating energy feeding to a power supply network.

### Summary of the Invention

It is an objective of the present invention to provide a simple, robust and cost-efficient system for storing thermal energy.

According to the invention this objective is solved by a system for storing thermal energy and by a method for operating a system for storing thermal energy according to the independent claims.

According to a first aspect of the present invention a system for storing thermal energy is disclosed. The system for storing thermal energy comprises a steam generation device for heating a steam turbine fluid of a steam turbine system. The steam generation device is feedable by a working fluid for heating the steam turbine fluid. The system for storing thermal energy further comprises a heater device for heating the working fluid and a thermal storage device comprising a first opening and a second opening. The first opening is connected with the heater device for transferring the working fluid between the thermal storage device and the heater device. The second opening is connected to the steam generation device for transferring the working fluid between the thermal storage device and the steam generation device. The steam generation device is connected to the heater device for transferring the working fluid between each other. The steam generation device, the heater device and the thermal storage device are connected in line, also comprising a bypass as defined in independent claim 1.

The system is arranged in a closed loop. Closed loop means that during an operation of the system no working fluid is exchanged between the system and the environment. Hence, there is no removing of the working fluid or adding of the working fluid.

The steam generation device may be a heat exchanger. In particular, the steam generation system heats up the steam turbine fluid for driving the steam turbine system. In a further exemplary embodiment, the steam generation device may comprise a boiler or an evaporator. Heat exchangers are devices for transferring thermal energy from one medium to another in the direction of a temperature gradient. Heat exchangers are built for changing a temperature of a medium for example by cooling or heating. In a further exemplary embodiment, the steam generation device comprises an indirect heat exchanger. In indirect heat exchangers the heat is transferred from one medium to another medium over solid walls separating the two used media from each other. In a further exemplary embodiment, the steam generation device may comprise also a counter-flow heat exchanger, a parallel-flow heat exchanger, a double pipe heat exchanger, a shell and tube heat exchanger, a plate heat exchanger or a heat exchanger consisting of more than one stage of heat exchange for improving the efficiency. Boilers are closed devices in which a medium is heated up and boiled, respectively. The heated or vaporized medium leaves the boiler and may be used in the steam turbine system. Evaporators are devices which are used to turn a medium from its liquid form into its gaseous form. The evaporated medium may as well be used in the steam turbine system.

The steam turbine fluid describes the fluid which drives the steam turbine system. The steam turbine fluid may be steam, water vapour or vapour with a high mass fraction of water in it, respectively. In a further exemplary embodiment, water vapour may be saturated but also unsaturated. Further, it may be possible to add supplements to the water vapour to influence physical characteristics of the water vapour, such as for example the evaporation point or the condensation point. The working fluid may further be an organic liquid which may be used in an Organic Rankine Cycle (ORC).

The steam turbine system may be a system which comprises a steam turbine and further devices for transforming thermal energy in mechanical energy and electricity, respectively. The subsequently described exemplary embodiment of the steam turbine system is only exemplary and not limiting. The steam turbine system comprises a steam turbine, a condenser, a generator, a first pump and optionally a second pump. The steam turbine may be a multi stage steam turbine or a single stage turbine. In the multi stage turbine the steam turbine fluid may be reheated between the different stages or a part of the steam turbine fluid may be extracted from the steam turbine due to too excessive cooling of the steam turbine fluid. The steam turbine comprises blades connected to a shaft. The energy of the steam turbine fluid flowing through the steam turbine is transmitted by the blades of the steam turbine to the shaft. The generator is connected to the shaft of the steam turbine and converts the rotational energy of the shaft of the steam turbine into electrical energy. The generated electrical energy may then be transferred to a power supply network or any other end-user. After flowing through the steam turbine, the steam turbine fluid flows through the condenser in which the steam turbine fluid is condensed into its liquid state. The first pump and the second pump drive the steam turbine fluid through the different components of the steam turbine system and through the steam generation device.

The heater device is an element which introduces heat energy to the working fluid. The working fluid may be in a gas or a liquid state. In an exemplary embodiment, the heater device may comprise a resistant heater, an electrical heater or an inductive heater.

The working fluid is a medium which flows through the system for storing thermal energy such as for example a gas or a liquid. Further, the medium may be a mixture consisting of a main component, such as water, with added supplements for influencing physical characteristics of the mixture, such as for example the evaporation point or the condensation point.

The thermal storage device may be a sensible thermal storage or a latent thermal storage. The thermal storage device may be filled with a thermal storage material. The thermal storage material may be a solid or bulk material, such as stones, bricks, ceramics or other solid material which has the ability to be heated up, keep its temperature and thus store thermal energy over a predetermined period of time. It should be understood that also water may be used as the thermal storage material. The thermal storage material may be heated up by the working fluid.

The thermal storage device comprises a first opening and a second opening. The working fluid may flow through the thermal storage device from the first opening to the second opening or from the second opening to the first opening. In the thermal storage device the working fluid may be in direct physical contact with the thermal storage material when the working fluid flows through the thermal storage device. In an exemplary embodiment, the thermal storage material may be provided as stones and the working fluid may be air. Thus, the air and the stones may come in direct physical contact with each other when the air flows through the thermal storage device. Furthermore, in the thermal storage device the working fluid may be in indirect contact with the thermal storage material when the working fluid flows through the thermal storage device.

The first opening may be an opening in the thermal storage device through which the thermal storage device is able to exchange the working fluid with the heater device. Additionally, in an exemplary embodiment, the first opening and the heater device may be connected by a pipe or a duct. The second opening may be a further opening in the thermal storage device through which the thermal storage device is able to exchange the working fluid with the steam generation device. Additionally, in a further exemplary embodiment, the second opening and the heater device may be connected by a pipe or a duct. In a further exemplary embodiment the first opening and the second opening are formed identically. But it should be understood that the first opening and the second opening may also be formed in two different shapes. In a further exemplary embodiment, the first opening and the second opening may be formed in the same side surface of the thermal storage device. This configuration may be advantageously when the overall configuration of the system for storing thermal energy does not permit another geometrical set-up because of geometrical restrains. As a matter of course, the first opening and the second opening may be formed in different side surfaces, in particular in opposite side surfaces, of the thermal storage device.

To connect the steam generation device, the heater device and the thermal storage device in line means that neither the steam generation device is connected parallel to the heater device and/or the thermal storage device, nor the heater device is connected parallel to the steam generation device and/or the thermal storage device, nor the thermal storage device is connected parallel to the steam generation device and/or the heater device. Bypassing the heater device is included in this configuration, as defined by appended independent claim 1. Further, bypassing the steam generation device by a shortcut pipe is not explicitly excluded in this configuration.

Hence, in contrast to conventional approaches, by the present invention, the steam generation device, the heater device and the thermal storage device are connected in line, such that one common working fluid flows in line through the steam generation device, the heater device and the thermal storage device. Hence, only one ducting system or line for forming a flow cycle between the steam generation device, the heater device and the thermal storage device and respectively in a charging and discharging cycle is necessary. In conventional approaches, at least two ducting systems, one for flowing through the heater device and the thermal storage device in a charging cycle and one flowing through the steam generation device and the thermal storage device in a discharging cycle is necessary. Hence, by needing only one ducting system or cycle for charging and discharging according to the present invention, a reduction of the overall length of a ducting system is achieved. Furthermore, by having only one cycle, only one fluid driving device (e.g. only one blower) is necessary. This leads to a more cost efficient and robust system for the entire installation in terms of installation and operation.

According to a further exemplary embodiment of the present invention, the system for storing thermal energy further comprises a fluid driving device, in particular a blower, for driving the working fluid.

The fluid driving device may be, aside from a blower, a fan, a ventilator, a super-charger or a device generating a pressure gradient such that the working fluid which flows through the fluid driving device may be accelerated in a predominant and predetermined direction of the fluid driving device. The fluid driving device may also be a multi-stage device in which the working fluid is accelerated in multiple stages such that an efficiency of the fluid driving device is improved.

According to a further exemplary embodiment of the present invention, the fluid driving device is connected to the second opening and the steam generation device. Thus, the working fluid may flow through the thermal storage device, further through the fluid driving device and next through the steam generation device.

It should be emphasized that the fluid driving device may be connected between the steam generation device and the second opening and thus to the thermal storage device in line and not in a parallel way. Hence, one fluid driving device may be sufficient to drive the working fluid through the thermal storage device, the heater device and the steam generation device. It should be mentioned that it may also be possible to integrate more than one fluid driving device in the system for storing thermal energy. The second, third or further fluid driving device may also be connected between the steam generation device and the second opening. When more than one fluid driving device is used it may be advantageous to use a plurality of fluid driving devices which may be identical in performance and/or form. The plurality of fluid driving devices may be among themselves be connected in line or parallel as long as they are connected in line between the steam generation device and the second opening.

In the described system the steam generation device and the thermal storage device are connected in line. A first flow direction is the direction of the working fluid from the thermal storage device to the steam generation device and a second flow direction is the direction from the steam generation device to the thermal storage device. The fluid driving device is connected between the steam generation device and the thermal storage device in such a way that the working fluid may always flow through the fluid driving device in the same direction both in the first flow direction and in the second flow direction. This is ensured by the used piping which interconnects the fluid driving device with both the thermal storage device and the steam generation device. The piping comprises a plurality of lines which are subsequently described in detail.

According to a further exemplary embodiment of the present invention, the system further comprises a first line which is connected between the second opening and the fluid driving device and a first valve which is connected to the first line for controlling a flow of working fluid from the second opening to the fluid driving device.

The system further comprises a second line which is connected between the fluid driving device and the second opening and a second valve which is connected to the second line for controlling a flow of working fluid from the fluid driving device to the second opening.

The system further comprises a third line which is connected between the fluid driving device and the steam generation device and a third valve which is connected to the third line for controlling a flow of working fluid from the fluid driving device to the steam generation device.

The system further comprises a fourth line which is connected between the steam generation device and the fluid driving device and a fourth valve which is connected to the fourth line for controlling a flow of working fluid from the steam generation device in a direction towards the fluid driving device.

The first line, the second line, the third line and the fourth line are structural components such as a pipe or a duct. The first line enables the working fluid to flow through the first line from the second opening in a direction towards the fluid driving device. The second line enables the working fluid to flow through the second line from the fluid driving device in a direction towards the second opening. The third line enables the working fluid to flow through the third line from the fluid driving device in a direction towards the steam generation device. The fourth line enables the working fluid to flow through the fourth line from the fluid driving device in a direction towards the steam generation device.

The respective valves may for example be a gate valve, a non-return valve or angle valve. The respective valves may also comprise a plurality of sub-valves to ensure the redundancy of a cut-off of the respective line. In a preferred exemplary embodiment the mechanics of the first valve is designed as simple as possible and additionally only one single valve is connected to the first line. Hence, the first valve is formed to be as robust and simple as possible.

Controlling a flow of working fluid from the second opening to the fluid drive device means that the first valve may regulate the flow of working fluid or may enable a flow of working fluid from the second opening to the fluid driving device.

Controlling a flow of working fluid from the fluid driving device to the second opening means that the second valve may regulate the flow of working fluid or may enable a flow of working fluid from the fluid driving device to the second opening.

Controlling a flow of working fluid from the fluid driving device to the steam generation device means that the third valve may regulate the flow of working fluid or may enable a flow of working fluid from the fluid driving device to the steam generation device.

Controlling a flow of working fluid from the steam generation device to the fluid driving device means that the fourth valve may regulate the flow of working fluid or may enable a flow of working fluid from the steam generation device to the fluid driving device.

According to the present invention, the system for storing thermal energy further comprises a first bypass line which is arranged in such a way that the working fluid selectively bypasses the heater device.

The first bypass line may be a duct or a pipe in which the working fluid may flow and which directly interconnects the first opening with the steam generation device. The working fluid may flow through the bypass line from the first opening to the steam generation device or from the steam generation device to the first opening.

Selectively bypassing means that a user or a driver program may choose whether the working fluid flows through the heater device or the working fluid bypasses the heater device.

According to a further exemplary embodiment of the present invention, the system for storing thermal energy further comprises a second bypass line which is arranged in such a way that the working fluid selectively bypasses the steam generation device.

The second bypass line may be a duct or a pipe in which the working fluid may flow and which directly interconnects the heater device with the second opening or the fluid driving device. The second bypass line may be formed identical or similar to the bypass line and/or the second bypass line. The working fluid may flow through the second bypass line from the heater device to the second opening or from the second opening to the heater device.

Selectively bypassing means that a user or a driver program may choose whether the working fluid flows through the steam generation device or the working fluid bypasses the steam generation device.

According to a further exemplary embodiment of the present invention, the steam generation device is a heat recovery steam generator which is cut short HRSG.

A HRSG may be an energy recovery heat exchanger which recovers energy from a stream. The HRSG may comprise e.g. four principal components. The four principal components are an economizer, an evaporator, a super-heater and a re-heater. The four principal components are put together to meet several requirements such as for example operating requirements or a given efficiency of the HRSG. Different HRSGs may be distinguished by the direction of an exhaust gas flow or the number of pressure levels integrated into the HRSG. In an exemplary embodiment, the HRSG may be a vertical type HRSG, a horizontal type HRSG, a single pressure HRSG or a multi pressure HRSG.

According to a further exemplary embodiment of the present invention, the thermal storage device has a plurality of chambers. The chambers are coupled in parallel with respect to each other. Each of the chambers which are arranged in parallel is coupled to the first opening and to the second opening.

According to a further exemplary embodiment of the present invention, the thermal storage device has a further plurality of chambers. The chambers are coupled in series with respect to each other. One of the further plurality of chambers is coupled to the first opening and another one of the further plurality of chambers is coupled to the second opening.

Each of the chambers may comprise the thermal storage material. The plurality of chambers and/or the further plurality of chambers may be integrated together in one housing. The thermal storage device may comprise the housing. The housing may comprise the plurality of chambers and the further plurality of chambers in such a way that a certain number of the chambers are coupled to each other in parallel and the remaining chambers are coupled to each other in series. Hence, a combination of chambers coupled in parallel and chambers coupled in series may be present in the thermal storage device.

According to a further aspect of the present invention, a method for operating a system for storing thermal energy as aforementioned is disclosed. The method comprises charging a thermal storage device in a charging cycle by streaming a working fluid from a heater device to the thermal storage device, and discharging the thermal storage device in a discharging cycle by streaming the working fluid from the thermal storage device to the steam generation device.

The charging cycle (i.e. in the operating state of charging the thermal storage device) may describe a flow direction of the working fluid in which the thermal storage device is charged with thermal energy which is transferred from the working fluid to the thermal storage material comprised in the thermal storage device. In the charging cycle, the working fluid flows first through the first opening into the thermal storage device, such that the first opening may be defined as a hot end of the thermal storage device. After flowing through the thermal storage device in which thermal energy is transferred from the working fluid to the thermal storage material, the working fluid leaves through the second opening and is therefore colder than when entering the thermal storage device through the first opening. Hence, the second opening may be in the charging cycle colder than the first opening and may therefore be defined as the cold end of the thermal storage device. A temperature level at the hot end (i.e. the first opening) may be 600°C and a temperature level at the cold end (i.e. at the second opening) may be 200°C but could also be ambient temperature.

In the charging cycle the working fluid may flow from the fluid driving device through the steam generation device, further through the heater device (in which the working fluid is heated up) and further through the first opening into the thermal storage device. Next, the working fluid flows through the thermal storage device from the first opening to the second opening of the thermal storage device and transfers thermal energy to the thermal storage material. The charging of the thermal storage device may be stopped when the temperature of the second opening starts to increase. Form the second opening the working fluid flows through the first line, the fluid driving device and the third line to the steam generation device.

The discharging cycle (i.e. in the operating state of discharging the thermal storage device) may describe a flow direction of the working fluid in which the thermal storage is discharged from thermal energy, wherein the working fluid absorbs thermal energy from the thermal storage material, for example. Hence, in the discharge cycle, the working fluid is heated up by the thermal storage device. The heated up working fluid heats up the steam turbine fluid in the steam generation device such that e.g. steam as steam turbine fluid is generated.

In the discharging cycle the working fluid flows from the fluid driving device to the second opening. The working fluid further through passes the thermal storage device in the direction from the second opening to the first opening and thermal energy is transferred from the thermal storage device to the working fluid. In the discharging cycle, the working fluid exiting the thermal storage device at the first opening has a higher temperature than the working fluid entering the thermal storage device at the second opening. Next, from the first opening the working fluid flows through the heater device and afterwards through the steam generation device where a steam turbine fluid is heated up by the thermal energy provided by the working fluid. Next, after having passed the steam generation device, the working fluid flows through the fourth line, the fluid driving device and the second line back to the second opening.

Contrary to the conventional known systems for storing thermal energy, the system disclosed in the present invention provides one unique flow path (lining or ducting system) for the working fluid in the charging cycle and the discharging cycle of the thermal storage device.

It has to be noted that embodiments of the invention have been described with reference to different subject-matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited. The invention is defined by appended independent claims 1 and 9.
Fig. 1 shows a schematical view of a system for storing thermal energy according to an exemplary embodiment of the present invention.
Fig. 2 shows a schematical view of a side cut of a thermal storage device according to an exemplary embodiment of the present invention.
Fig. 3 shows a schematical view of a conventional system for storing thermal energy according to the state of art.

### Detailed Description

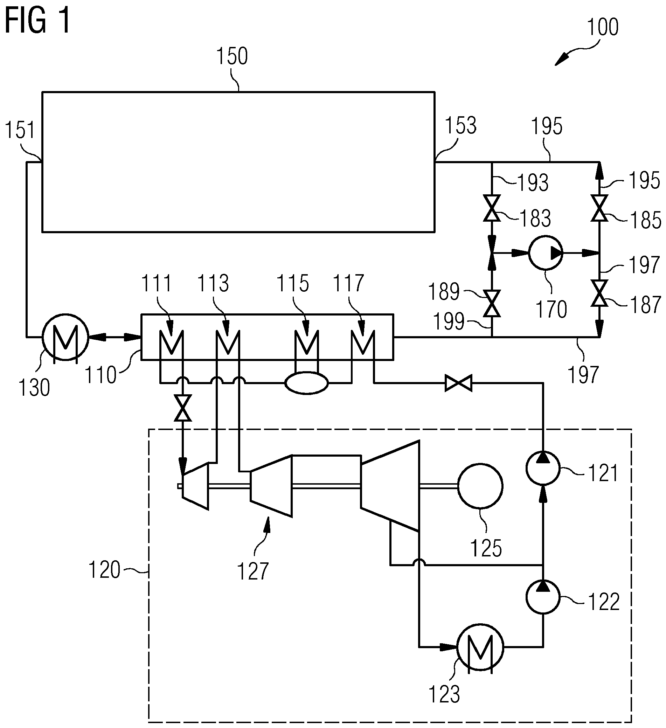

The illustrations in the drawings are schematically. It is noted that in different figures, similar or identical elements are provided with the same reference signs. Furthermore, the Figures showing embodiments of the invention may not show all features forming part of the invention as defined by appended independent claims 1 and 9. For example, a first bypass forms an integral part of the invention, but is not shown by Figure 1.

Fig. 1 shows a system 100 for storing thermal energy according to an exemplary embodiment of the present invention. The system 100 comprises a steam generation device 110 for heating a steam turbine fluid of a steam turbine system 120. The steam generation device 110 is feedable by a working fluid for heating the steam turbine fluid. The system 100 for storing thermal energy further comprises a heater device 130 for heating the working fluid and a thermal storage device 150 comprising a first opening 151 and a second opening 153. The first opening 151 is connected with the heater device 130 for transferring the working fluid between the thermal storage device 150 and the heater device 130. The second opening 153 is connected with the steam generation device 110 via the fluid driving device 170 for transferring the working fluid between the thermal storage device 150 and the steam generation device 110. The steam generation device 110 is connected to the heater device 130 for transferring the working fluid between each other. The steam generation device 110, the heater device 130 and the thermal storage device 150 are connected in line.

The steam generation device 110 is a device for exchanging thermal energy, in particular a heat exchanger. In Fig. 1 the steam generation device 110 is a HRSG (Heat recovery steam generator). The HRSG comprises e.g. four components being e.g. an economizer 117, an evaporator 115, a super-heater 111 and a re-heater 113. The four components are arranged for heating a steam turbine fluid which is extracted at specific locations of the steam turbine system 120.

The steam turbine system 120 which is shown as an exemplary embodiment in Fig. 1 comprises a steam turbine 127, a condenser 123, a generator 125, a first pump 121 and a second pump 122. After flowing through the steam turbine 127, the steam turbine fluid flows through the condenser 123 in which the steam turbine fluid is condensed e.g. in its liquid state. The first pump 121 and the second pump 122 drive the steam turbine fluid through the different components and through the steam generation device 110.

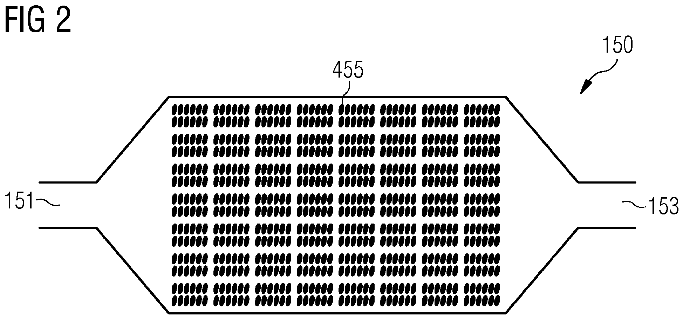

The thermal storage device 150 may be a sensible thermal storage or a latent thermal storage. The thermal storage device 150 may be filled with a thermal energy storage material 455 (shown in detail in Fig. 2).

The first opening 151 may be an opening in the thermal storage device 150 through which the thermal storage device 150 is able to exchange the working fluid with the heater device 130, e.g. by connecting the thermal storage device 150 with the heater device 130 via a duct.

The second opening 153 may be a further opening in the thermal storage device 150 through which the thermal storage device 150 is able to exchange the working fluid with the steam generation device 110. In Fig. 1 the first opening 151 and the second opening 153 are formed in opposing side surfaces of the thermal storage device 150.

The system 100 further comprises a fluid driving device 170, in particular a blower, for driving the working fluid.

The working fluid is driven and accelerated by the fluid driving device 170 in a predominant and predetermined flow direction of the fluid driving device 170. The predominant and predetermined flow direction of the fluid driving device 170 is from a downstream end of the fluid driving device 170 to an upstream end of the fluid driving device 170.

The system 100 for storing thermal energy further comprises a first line 193 which is connected between the second opening 153 and the downstream end of the fluid driving device 170, a second line 195 which is connected between the upstream end of the fluid driving device 170 and the second opening 153, a third line 197 which is connected between the upstream end of the fluid driving device 170 and the steam generation device 110 and a fourth line 199 which is connected between the steam generation device 110 and the downstream end of the fluid driving device 170.

The first line 193 enables the working fluid to flow through the first line 193 from the second opening 153 in a direction towards the downstream end of the fluid driving device 170. The second line 195 enables the working fluid to flow through the second line 195 from the upstream end of the fluid driving device 170 in a direction towards the second opening 153. The third line 197 enables the working fluid to flow through the third line 197 from the upstream end of the fluid driving device 170 in a direction towards the steam generation device 110. The fourth line 199 enables the working fluid to flow through the fourth line 199 from the steam generation device 110 in a direction towards the downstream end of the fluid driving device 170.

A first valve 183 is connected to the first line 193 for controlling a flow of working fluid from the second opening 153 in a direction towards the fluid driving device 170. A second valve 185 is connected to the second line 195 for controlling a flow of working fluid from the fluid driving device 170 in a direction towards the second opening 153. A third valve 187 is connected to the third line 197 for controlling a flow of working fluid from the fluid driving device 170 in a direction towards the steam generation device 110. A fourth valve 189 is connected to the fourth line 199 for controlling a flow of working fluid from the steam generation device 110 in a direction towards the fluid driving device 170.

In a charging cycle a flow direction of the working fluid is described in which the thermal storage device 150 is charged with thermal energy which is transferred from the working fluid to the thermal storage material (shown in detail in Fig. 2) comprised in the thermal storage device 150. In the charging cycle, the working fluid flows first through the first opening 151 into the thermal storage device 150, such that the first opening 151 may be defined as a hot end of the thermal storage device 150. While flowing through the thermal storage device 150, thermal energy is transferred from the working fluid to the thermal storage material, hence the working fluid gets colder. The working fluid leaves through the second opening 153 and is colder than when entering the thermal storage device 150 through the first opening 151. Hence, the second opening 153 may be in the charging cycle colder than the first opening 151 and may therefore be defined as the cold end of the thermal storage device 150. A temperature level at the hot end (i.e. the first opening 151) may be 600°C and a temperature level at the cold end (i.e. at the second opening 153) may be 200°C or ambient temperature.

In the charging cycle the working fluid may flow from the fluid driving device 170 via the third line 197 and the third valve 187 through the steam generation device 110, further through the heater device 130 (in which the working fluid is heated up) and further through the first opening 151 into the thermal storage device 150. Next, the working fluid flows from the first opening 151 to the second opening 153 of the thermal storage device 150 and transfers thermal energy to the thermal storage device 150. The charging of the thermal storage device 150 may be stopped when the temperature of the second opening 153 starts to increase. From the second opening 153 the working fluid flows through the first line 193, to the fluid driving device 170 and closes the loop. In the charging cycle, the working fluid exiting the thermal storage device 150 at the second opening 153 has a lower temperature than the working fluid entering the thermal storage device 150 at the first opening 151.

In a discharging cycle a flow direction of the working fluid from the second opening 153 to the first opening 151 is described in which the thermal storage device 150 is discharged from thermal energy, wherein the working fluid absorbs thermal energy from the thermal storage device 150, for example. Hence, in the discharge cycle, the working fluid is heated up by the thermal storage device 150. The heated up working fluid heats up the steam turbine fluid in the steam generation device 110 such that e.g. steam as steam turbine fluid is generated. In the discharging cycle, the working fluid exiting the thermal storage device 150 at the first opening 151 has a higher temperature than the working fluid entering the thermal storage device 150 at the second opening 153.

In the discharging cycle the working fluid flows from the fluid driving device 170 via the second line 195 and the second valve 185 to the second opening 153. The working fluid further passes through the thermal storage device 150 in the direction from the second opening 153 to the first opening 151 and thermal energy is transferred from the thermal storage device 150 to the working fluid. Next, from the first opening 151 the working fluid flows through the heater device 130 and afterwards through the steam generation device 110, where a steam turbine fluid is heated up by the thermal energy provided by the working fluid. Next, after having passed the steam generation device 110, the working fluid flows through the fourth line 199 to the fluid driving device 170 and closes the loop.

In the charging cycle the first valve 183 and the third valve 187 are in an open position and the second valve 185 and the fourth valve 189 are in a closed position. Thus, the working fluid flows through the first line 193, the fluid driving device 170 and subsequently the third line 197.

In the discharging cycle the second valve 185 and the fourth valve 189 are in the open position and the first valve 183 and the third valve 187 are in the closed position. Thus, the working fluid flows through the fourth line 199, the fluid driving device 170 and subsequently the second line 195.

An advantage of the abovementioned arrangement of the four lines 193, 195, 197, 199 and the abovementioned control of the four valves 183, 185, 187, 189 is that in the charging cycle and in the discharging cycle the working fluid flows through the fluid driving device 170 in the same flow direction. Hence, the fluid driving device 170 may be a simple and robust component. Another advantage of the abovementioned arrangement is that only one fluid driving device 170 is needed to have the working fluid flow through the thermal energy storage 150 in different directions.

Fig. 2 shows a thermal storage device 150 according to an exemplary embodiment of the present invention. The thermal storage material 455 may be a solid or bulk material, such as stones, bricks, ceramics or other solid materials which have the ability to be heated up, keep their temperatures and thus store thermal energy over a predetermined period of time. It should be understood that also water may be used as the thermal storage material 455. The thermal storage material 455 may be heated up by the working fluid. The thermal storage device 150 comprises a first opening 151 and a second opening 153. The working fluid may flow through the thermal storage device 150 from the first opening 151 to the second opening 153 or from the second opening 153 to the first opening 151. In the thermal storage device 150 as it is shown in Fig. 2 the working fluid may be in direct physical contact with the thermal storage material 455 when the working fluid flows through the thermal storage device 150. In an exemplary embodiment, the thermal storage material 455 may be provided as stones and the working fluid may be air. Thus, the air and the stones may come in direct physical contact with each other when the air flows through the thermal storage device 150. Furthermore, in the thermal storage device 150 the working fluid may be in indirect contact with the thermal storage material 455 when the working fluid flows through the thermal storage device 150.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. System (100) for storing thermal energy, the system (100) comprising
a steam generation device (110) for heating a steam turbine fluid of a steam turbine system (120),
wherein the steam generation device (110) is feedable by a working fluid for heating the steam turbine fluid,
a heater device (130) for heating the working fluid, and
a thermal storage device (150) comprising a first opening (151) and a second opening (153),
wherein the first opening (151) is connected with the heater device (130) for transferring the working fluid between the thermal storage device (150) and the heater device (130), wherein the second opening (153) is connected with the steam generation device (110) for transferring the working fluid between the thermal storage device (150) and the steam generation device (110),
wherein the steam generation device (110) is connected to the heater device (130) for transferring the working fluid between each other,
wherein the steam generation device (110), the heater device (130) and the thermal storage device (150) are connected in line, **characterized in that** the system (100) further comprises a first bypass line which is arranged in such a way that the working fluid selectively bypasses the heater device (130).

2. System (100) according to the preceding claim, further comprising
a fluid driving device (170), in particular a blower, for driving the working fluid.

3. System (100) according to claim 2,
wherein the fluid driving device (170) is connected to the second opening (153) and the steam generation device (110).

4. System (100) according to claim 3, further comprising
a first line (193) which is connected between the second opening (153) and the fluid driving device (170),
a first valve (183),
wherein the first valve (183) is connected to the first line (193) for controlling a flow of working fluid between the second opening (153) and the fluid driving device (170),
a second line (195) which is connected between the fluid driving device (170) and the second opening (153),
a second valve (185),
wherein the second valve (185) is connected to the second line (195) for controlling a flow of the working fluid between the fluid driving device (170) and the second opening (153),
a third line (197) which is connected between the fluid driving device (170) and the steam generation device (110),
a third valve (187),
wherein the third valve (187) is connected to the third line (197) for controlling a flow of working fluid between the fluid driving device (170) and the steam generation device (110),
a fourth line (199) which is connected between the steam generation device (110) and the fluid driving device (170), and
a fourth valve (189),
wherein the fourth valve (189) is connected to the fourth line (199) for controlling a flow of working fluid between the steam generation device (110) and the fluid driving device (170).

5. System (100) according to one of the claims 1 to 4, further comprising
a second bypass line which is arranged in such a way that the working fluid selectively bypasses the steam generation device (110).

6. System (100) according to one of the claims 1 to 5, wherein the steam generation device (110) is a heat recovery steam generator.

7. System (100) according to one of the claims 1 to 6, wherein the thermal storage device (150) has a plurality of chambers,
wherein the chambers are coupled in parallel with respect to each other,
wherein each of the parallel arranged chambers is coupled to the first opening (151) and to the second opening (153).

8. System (100) according to one of the claims 1 to 7, wherein the thermal storage device (150) has a further plurality of chambers,
wherein the chambers are coupled in series with respect to each other,
wherein one of the further plurality of chambers is coupled to the first opening (151) and another one of the further plurality of chambers is coupled to the second opening (153).

9. Method for operating a system (100) for storing thermal energy according to one of the preceding claims, the method comprises
charging a thermal storage device (150) in a charging cycle by streaming a working fluid from a heater device (130) to a thermal storage device (150), and
discharging the thermal storage device (150) in the discharging cycle by streaming the working fluid from the thermal storage device (150) to the heater device (130), wherein the system (100) further comprises a first bypass line which is arranged in such a way that the working fluid selectively bypasses the heater device (130).

## Patentansprüche

1. System (100) zur Speicherung von Wärmeenergie, wobei das System (100) umfasst:
eine Dampferzeugungsvorrichtung (110) zum Erwärmen eines Dampfturbinen-Fluids eines Dampfturbinensystems (120),
wobei der Dampferzeugungsvorrichtung (110) ein Arbeitsfluid zum Erwärmen des Dampfturbinen-Fluids zugeführt werden kann,
eine Heizvorrichtung (130) zum Erwärmen des Arbeitsfluids, und
eine Wärmespeichervorrichtung (150), die eine erste Öffnung (151) und eine zweite Öffnung (153) umfasst,
wobei die erste Öffnung (151) mit der Heizvorrichtung (130) zum Transportieren des Arbeitsfluids zwischen der Wärmespeichervorrichtung (150) und der Heizvorrichtung (130) verbunden ist,
wobei die zweite Öffnung (153) mit der Dampferzeugungsvorrichtung (110) zum Transportieren des Arbeitsfluids zwischen der Wärmespeichervorrichtung (150) und der Dampferzeugungsvorrichtung (110) verbunden ist,
wobei die Dampferzeugungsvorrichtung (110) mit der Heizvorrichtung (130) zum Transportieren des Arbeitsfluids zwischen ihnen verbunden ist,
wobei die Dampferzeugungsvorrichtung (110), die Heizvorrichtung (130) und die Wärmespeichervorrichtung (150) in Reihe verbunden sind,
**dadurch gekennzeichnet, dass**
das System (100) ferner eine erste Umgehungsleitung umfasst, welche derart angeordnet ist, dass das Arbeitsfluid die Heizvorrichtung (130) selektiv umgeht.

2. System (100) nach dem vorhergehenden Anspruch, welches ferner umfasst:
eine Fluidantriebsvorrichtung (170), insbesondere ein Gebläse, zum Antreiben des Arbeitsfluids.

3. System (100) nach Anspruch 2,
wobei die Fluidantriebsvorrichtung (170) mit der zweiten Öffnung (153) und der Dampferzeugungsvorrichtung (110) verbunden ist.

4. System (100) nach Anspruch 3, welches ferner umfasst:
eine erste Leitung (193), welche zwischen der zweiten Öffnung (153) und der Fluidantriebsvorrichtung (170) verläuft,
ein erstes Ventil (183),
wobei das erste Ventil (183) mit der ersten Leitung (193) zur Steuerung eines Durchflusses von Arbeitsfluid zwischen der zweiten Öffnung (153) und der Fluidantriebsvorrichtung (170) verbunden ist,
eine zweite Leitung (195), welche zwischen der Fluidantriebsvorrichtung (170) und der zweiten Öffnung (153) verläuft,
ein zweites Ventil (185),
wobei das zweite Ventil (185) mit der zweiten Leitung (195) zur Steuerung eines Durchflusses des Arbeitsfluids zwischen der Fluidantriebsvorrichtung (170) und der zweiten Öffnung (153) verbunden ist,
eine dritte Leitung (197), welche zwischen der Fluidantriebsvorrichtung (170) und der Dampferzeugungsvorrichtung (110) verläuft,
ein drittes Ventil (187),
wobei das dritte Ventil (187) mit der dritten Leitung (197) zur Steuerung eines Durchflusses von Arbeitsfluid zwischen der Fluidantriebsvorrichtung (170) und der Dampferzeugungsvorrichtung (110) verbunden ist,
eine vierte Leitung (199), welche zwischen der Dampferzeugungsvorrichtung (110) und der Fluidantriebsvorrichtung (170) verläuft, und
ein viertes Ventil (189),
wobei das vierte Ventil (189) mit der vierten Leitung (199) zur Steuerung eines Durchflusses von Arbeitsfluid zwischen der Dampferzeugungsvorrichtung (110) und der Fluidantriebsvorrichtung (170) verbunden ist.

5. System (100) nach einem der Ansprüche 1 bis 4, welches ferner umfasst:
eine zweite Umgehungsleitung, welche derart angeordnet ist, dass das Arbeitsfluid die Dampferzeugungsvorrichtung (110) selektiv umgeht.

6. System (100) nach einem der Ansprüche 1 bis 5,
wobei die Dampferzeugungsvorrichtung (110) ein Abhitzedampferzeuger ist.

7. System (100) nach einem der Ansprüche 1 bis 6,
wobei die Wärmespeichervorrichtung (150) eine Vielzahl von Kammern aufweist,
wobei die Kammern parallel zueinander gekoppelt sind,
wobei jede der parallel angeordneten Kammern mit der ersten Öffnung (151) und mit der zweiten Öffnung (153) gekoppelt ist.

8. System (100) nach einem der Ansprüche 1 bis 7,
wobei die Wärmespeichervorrichtung (150) eine weitere Vielzahl von Kammern aufweist,
wobei die Kammern in Reihe miteinander gekoppelt sind,
wobei eine der weiteren Vielzahl von Kammern mit der ersten Öffnung (151) gekoppelt ist und eine andere der weiteren Vielzahl von Kammern mit der zweiten Öffnung (153) gekoppelt ist.

9. Verfahren zum Betrieb eines Systems (100) zur Speicherung von Wärmeenergie nach einem der vorhergehenden Ansprüche, wobei das Verfahren umfasst:
Laden einer Wärmespeichervorrichtung (150) in einem Ladezyklus durch Leiten eines Arbeitsfluids von einer Heizvorrichtung (130) zu einer Wärmespeichervorrichtung (150), und
Entladen der Wärmespeichervorrichtung (150) in dem Entladezyklus durch Leiten des Arbeitsfluids von der Wärmespeichervorrichtung (150) zu der Heizvorrichtung (130), wobei das System (100) ferner eine erste Umgehungsleitung umfasst, welche derart angeordnet ist, dass das Arbeitsfluid die Heizvorrichtung (130) selektiv umgeht.

## Revendications

1. Système (100) de stockage d'énergie thermique, le système (100) comprenant :
un dispositif de production de vapeur (110) pour chauffer un fluide de turbine à vapeur d'un système de turbine à vapeur (120),
dans lequel le dispositif de production de vapeur (110) peut être alimenté par un fluide de travail pour chauffer le fluide de turbine à vapeur,
un dispositif de chauffage (130) destiné à chauffer le fluide de travail, et
un dispositif de stockage thermique (150) comprenant une première ouverture (151) et une seconde ouverture (153),
dans lequel la première ouverture (151) est connectée au dispositif de chauffage (130) pour acheminer le fluide de travail entre le dispositif de stockage thermique (150) et le dispositif de chauffage (130),
la seconde ouverture (153) est connectée au dispositif de génération de vapeur (110) pour acheminer le fluide de travail entre le dispositif de stockage thermique (150) et le dispositif de production de vapeur (110),
le dispositif de production de vapeur (110) est connecté au dispositif de chauffage (130) pour acheminer le fluide de travail entre eux, et
le dispositif de production de vapeur (110), le dispositif de chauffage (130) et le dispositif de stockage thermique (150) sont connectés en ligne,
**caractérisé en ce que** le système (100) comprend en outre une première conduite de dérivation qui est disposée de manière à ce que le fluide de travail contourne sélectivement le dispositif de chauffage (130).

2. Système (100) selon la revendication 1, comprenant en outre un dispositif d'entraînement de fluide (170), en particulier une soufflante, pour entraîner le fluide de travail.

3. Système (100) selon la revendication 2, dans lequel le dispositif d'entraînement de fluide (170) est connecté à la seconde ouverture (153) et au dispositif de production de vapeur (110).

4. Système (100) selon la revendication 3, comprenant en outre :
une première conduite (193) qui est connectée entre la seconde ouverture (153) et le dispositif d'entraînement de fluide (170),
une première vanne (183),
dans lequel la première vanne (183) est connectée à la première conduite (193) pour réguler un écoulement de fluide de travail entre la seconde ouverture (153) et le dispositif d'entraînement de fluide (170),
une seconde conduite (195) qui est connectée entre le dispositif d'entraînement de fluide (170) et la seconde ouverture (153),
une seconde vanne (185),
dans lequel la seconde vanne (185) est connectée à la seconde conduite (195) pour réguler un écoulement de fluide de travail entre le dispositif d'entraînement de fluide (170) et la seconde ouverture (153),
une troisième conduite (197) qui est connectée entre le dispositif d'entraînement de fluide (170) et le dispositif de production de vapeur (110),
une troisième vanne (187),
dans lequel la troisième vanne (187) est connectée à la troisième conduite (197) pour réguler un écoulement de fluide de travail entre le dispositif d'entraînement de fluide (170) et le dispositif de production de vapeur (110),
une quatrième conduite (199) qui est connectée entre le dispositif de production de vapeur (110) et le dispositif d'entraînement de fluide (170), et
une quatrième vanne (189),
dans lequel la quatrième vanne (189) est connectée à la quatrième conduite (199) pour réguler un écoulement de fluide de travail entre le dispositif de production de vapeur (110) et le dispositif d'entraînement de fluide (170) .

5. Système (100) selon l'une des revendications 1 à 4, comprenant en outre
une seconde conduite de dérivation qui est agencée de manière à ce que le fluide de travail contourne sélectivement le dispositif de production de vapeur (110).

6. Système (100) selon l'une des revendications 1 à 5, dans lequel le dispositif de production de vapeur (110) est un générateur de vapeur à récupération de chaleur.

7. Système (100) selon l'une des revendications 1 à 6, dans lequel
le dispositif de stockage thermique (150) comporte une pluralité de chambres,
les chambres sont couplées en parallèle l'une par rapport à l'autre, et
chacune des chambres agencées en parallèle est couplée à la première ouverture (151) et à la seconde ouverture (153) .

8. Système (100) selon l'une des revendications 1 à 7, dans lequel :
le dispositif de stockage thermique (150) comporte plusieurs chambres supplémentaires,
les plusieurs chambres supplémentaires sont couplées en série l'une par rapport à l'autre, et
l'une des plusieurs chambres supplémentaires est couplée à la première ouverture (151) et une autre des plusieurs chambres supplémentaires est couplée à la seconde ouverture (153).

9. Procédé de fonctionnement d'un système (100) de stockage d'énergie thermique selon l'une des revendications précédentes, comprenant les étapes consistant à :
charger un dispositif de stockage thermique (150) dans un cycle de chargement en faisant écouler un fluide de travail d'un dispositif de chauffage (130) jusqu'à un dispositif de stockage thermique (150), et
décharger le dispositif de stockage thermique (150) dans le cycle de décharge en faisant écouler le fluide de travail du dispositif de stockage thermique (150) jusqu'au dispositif de chauffage (130),
dans lequel le système (100) comprend en outre une première conduite de dérivation qui est agencée de manière à ce que le fluide de travail contourne sélectivement le dispositif de chauffage (130).
